# EUROPÄISCHE PATENTSCHRIFT

(11) **EP 2 893 857 B1**
(45) Veröffentlichungstag und Bekanntmachung des Hinweises auf die Patenterteilung: **03.03.2021**
(21) Anmeldenummer: 14193645.0
(22) Anmeldetag: 18.11.2014
(51) Int. Cl.: A47J 31/44

(54) **Verfahren und Einrichtung zum Auslassen von Milchschaum, Flüssigkeiten oder ähnlichem**
Method and device for discharging milk foam, liquids or the like
Procédé et dispositif de distribution de mousse de lait, liquides ou analogues

(30) Priorität: 29.11.2013 CH 19892013
(43) Veröffentlichungstag der Anmeldung: 15.07.2015
(73) Patentinhaber: Steiner AG Weggis, 6353 Weggis (CH)
(72) Erfinder: Steiner, Adrian, 6353 Weggis (CH)
(74) Vertreter: Luchs, Willi

(56) Entgegenhaltungen:
- EP-A1- 1 716 796
- EP-A2- 2 461 725
- TW-U- M 426 372
- US-A1- 2007 031 558
- US-A1- 2010 126 354
- Daimler: "Caffé mit Herz in der Daimler Kantine", , 17. Juli 2008 (2008-07-17), XP054975875, Gefunden im Internet: URL:https://youtu.be/X3bXaZqu7w4 [gefunden am 2015-05-22]

## Beschreibung

Die Erfindung betrifft ein Verfahren zum Auslassen von Milchschaum, Flüssigkeiten oder ähnlichem aus einer Einrichtung, bei dem nach dem Auslassen eines Getränkes, vorzugsweise Kaffee, in einen Behälter eine bestimmte Menge Milchschaum oder ähnlichem zugeführt wird, welche auf der Oberfläche des eingelassenen Getränkes, vorzugsweise Kaffee, verbleibt, sowie eine Einrichtung zur Durchführung des Verfahrens.

Bei der Getränke-, insbesondere Kaffeezubereitung, die in der Fachwelt vielfach unter der Bezeichnung "Latte-Art" bekannt ist, wird dem Kaffee von Hand Milchschaum aus einer Kanne oder ähnlichem in der Weise zugeführt, dass auf dem Kaffee ein graphisches Muster mit figuralen oder abstrakten Motiven entsteht, das von der Kreativität und Geschicklichkeit der auszuführenden Person bestimmt ist. Eine solche Zubereitungsart ist besonders zeitaufwendig und verlangt viel Übung, bis eine Person solche Motive formschön bilden kann.

Gemäß der Druckschrift EP-A-1 716 796 ist eine Schäumervorrichtung mit einem Flussregulierungs-System erläutert, bei welcher der Schaum durch dieses Regulierungssystem einerseits zum Brechen der kinetischen Energie und andererseits zum Auslassen von unterschiedlichen Richtungen dient. Damit kann Milchschaum ohne Verschiebung der Tasse zusammen mit Kaffee ausgelassen werden. Mit dieser Schäumervorrichtung kann aber nicht ein graphisches Muster auf der Oberfläche des eingelassenen Getränks in automatischer Weise erzeugt werden.

Im Dokument TW-M-426 372 ist ein programmierbares Steuerungsmodul zur Erzeugung von Milchschaum offenbart. Es wird dabei die Tasse in einem schrägen Winkel gehalten und sie wird dann geschwenkt, wobei die obere Öffnung der Tasse vorwärtsbewegt und der Kaffeedrink so fertig erstellt wird, wobei durch die Milch ein Blumenmuster bewirkt wird.

Der Erfindung liegt demgegenüber die Aufgabe zugrunde, ein Verfahren der eingangs genannten Art zu schaffen, mittels welchem zeitsparend die massenweise Zubereitung von Kaffee und ähnlichen Produkten möglich ist.

Diese Aufgabe wird erfindungsgemäss dadurch gelöst, dass der Milchschaum während dem Auslassen derart zugeführt wird, dass durch diesen ein graphisches Muster auf der Oberfläche des eingelassenen Getränks erzeugt wird.

Auf diese Weise können in verhältnismässig kurzer Zeit weitgehend gleichmässige Milchschaummuster nach vorab auswählbaren Motiven unabhängig von der handwerklichen Geschicklichkeit des Benutzers erzeugt werden. Dies ermöglicht die massenweise Kaffeezubereitung nach "Latte-Art" mit qualitativ einwandfreien Milchschaummustern.

Diese Erfindung sieht auch vor, dass die Einrichtung, mittels welcher der Kaffee-Milchschaum zugeführt wird, in drei vorzugsweise gleichwinklig zueinander ausgerichteten Koordinatenrichtungen gesteuert wird. Nach dieser Verfahrensweise kann der Kaffee mit reliefartigen Milchschaummustern versehen werden.

Die Erfindung sieht ebenfalls vor, dass die Steuerung der den Milchschaum zuführenden Einrichtung programmierbar ist, wobei der Benutzer beispielsweise das von ihm bevorzugte Milchschaummuster aus einer Vielzahl von Motiven auswählen kann.

Die Einrichtung zur Durchführung des erfindungsgemässen Verfahrens ist mit individuell betätigbaren Gelenkarmen zum Führen eines Milchschaumspenders in jeweils einer Koordinatenrichtung ausgestattet.

In der veranschaulichten Ausführungsform ist die Einrichtung als Roboter mit individuell gesteuerten Rotationsantrieben ausgestattet, die in einem gleichwinkligen Dreieck angeordnet sind und mit Betätigungshebeln zum Betätigen der Gelenkarme versehen sind.

Zur Aufnahme des Kaffees und des Milchschaums werden in der Regel Kaffeetassen oder ähnliche Behälter eingesetzt, deren Dimensionen nicht normiert sind und deren Position relativ zum Milchschaumspender innerhalb bestimmter Grenzen variiert. Aus diesem Grund sieht die Erfindung auch vor, dass die Einrichtung zur Durchführung des erfindungsgemässen Verfahrens mit Sensoren zur Erkennung der Tassenhöhe und Tassenposition versehen ist.

Damit der Benutzer vor den beweglichen Einrichtungsteilen geschützt ist, kann die Einrichtung mit einem Sicherheitssystem versehen werden. Diese kann ein Lichtgitter oder einen Lichtvorhang aufweisen, der den Betrieb stoppt, sobald ein Fremdkörper ihn unterbricht. Das Sicherheitssystem kann auch eine Schutzhaube beinhalten, durch welche die Einrichtung während des Zubereitungsvorgangs abgeschirmt wird.

Die erfindungsgemässe Einrichtung ist so konstruiert, dass sie vollumfänglich in eine herkömmliche Kaffeemaschine integriert werden kann. Es ist aber auch möglich, die Einrichtung als selbstständiges Modul auszubilden.

Die Erfindung wird nachfolgend anhand eines Ausführungsbeispiels unter Bezugnahme auf die Zeichnung näher erläutert. Es zeigt:
- Fig. 1: eine erfindungsgemässe Einrichtung in einer perspektivischen schematischen Ansicht; und
- Fig. 2: eine perspektivische Ansicht einer zweiten Ausführungsform einer erfindungsgemässen Einrichtung mit Linearmotoren als Antriebsmittel.

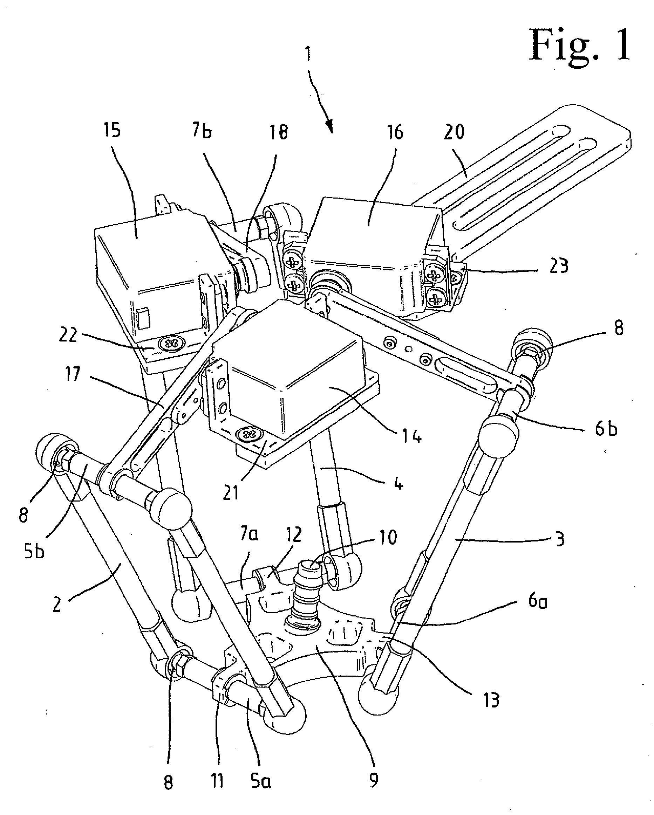

Fig. 1 zeigt eine Einrichtung 1 für ein Verfahren, bei dem nach dem Einfüllen eines Getränks, in einen Behälter eine bestimmte Menge Milchschaum oder ähnlichem zugeführt wird, welche auf und/oder unterhalb der Oberfläche des eingelassenen Getränks verbleibt. Im Normalfall vermischt sich beispielsweise der eingelassene Milchschaum mit dem Kaffee im Oberflächenbereich von letzterem und ein Teil des Milchschaums verbleibt oberhalb dieser Oberfläche.

Als Getränk eignet sich vorzugsweise Kaffee für die Erzeugung eines Cappuccinos. Es kann sich aber auch um heisse oder kalte Schokolade-, Milch- oder andere Mischgetränke handeln. Anstelle von Milchschaum könnte auch ein anderes schaum- oder creme-förmiges Medium ausgelassen werden.

Erfindungsgemäss wird der Milchschaum oder ähnliches während dem Auslassen derart gesteuert zugeführt, dass durch diesen ein graphisches Muster auf der Oberfläche des eingelassenen Getränks erzeugt wird.

Mit diesem Verfahren kann als graphisches Muster die Form eines Herzes, einer Blume, einer Pflanze, eines Gesichtes, eines Firmenlogos oder eines beliebigen Motivs erzeugt werden.

Die erfindungsgemässe Einrichtung 1 besteht grundsätzlich aus drei mittels Rotationsantrieben 14, 15, 16 individuell bewegbaren Gelenkarmen 2, 3, 4, einer mit diesen gelenkig verbundenen Tragplatte 9 und einem mit einem nicht näher dargestellten Milchschaumspender 10 verbundenen Auslaufstutzen. Diese sind paarweise durch Querstreben 5a, 5b; 6a, 6b und 7a, 7b mit Kugelgelenken 8 verbunden, welche die allseitige Gelenkigkeit der Gelenkarme sicherstellen. Auf den unteren Querstreben 5a, 6a, 7a, ist diese Tragplatte 9 gehalten. Diese drei Aufhängungslager 11, 12, 13 bilden die Ecken eines gleichwinkligen Dreiecks. Diese Einrichtung 1 ist dabei wie ein Roboter ausgebildet und wird programmgesteuert betätigt.

Die Betätigung der Gelenkarme 2,3,4 erfolgt mittels Rotationsantriebe 14, 15, 16 durch Betätigungshebel 17, 18 19, die auf die oberen Querstreben 5b, 6b, 7b der Gelenkarme wirksam sind. Die Rotationsantriebe 14, 15, 16 werden nach einem vorgegebenen Programm so gesteuert, dass jeder Gelenkarm in einer beliebigen Koordinatenrichtung bewegt wird. Beim vorliegenden Ausführungsbeispiel sind diese Richtungen in Winkeln von je 120° zueinander angeordnet. Die entsprechende Anordnung ergibt sich auch für die Rotationsantriebe 14, 15, 16 auf dem tragenden Gestell, von dem in Fig. 1 lediglich die Tragplatte 20 und die drei Motorenträger 21, 22, 23 sichtbar sind.

Während des Zubereitungsvorgangs werden die Gelenkarme 2,3,4 durch die Rotationsantriebe 14, 15, 16 so bewegt, dass sie den Auslaufstutzen 10 für den Milchschaum über die Oberfläche des zu verzierenden Getränks präzise gemäss der Geometrie des jeweils ausgewählten Milchschaummusters führen können. Die dazugehörige Steuerung ist vorteilhaft Bestandteil einer eigenständigen gerätespezifischen Software. Die Programmierung umfasst auch die Wählbarkeit des Musters aus einer Vielzahl einprogrammierter Motive.

Die erfindungsgemässe Einrichtung 1 zeichnet sich dadurch aus, dass sie stabil und robust ist, und im Dauerbetrieb die notwendige Betriebssicherheit gewährleistet. Die Einrichtung ermöglicht eine präzise und feinfühlige Führung des Milchstrahls.

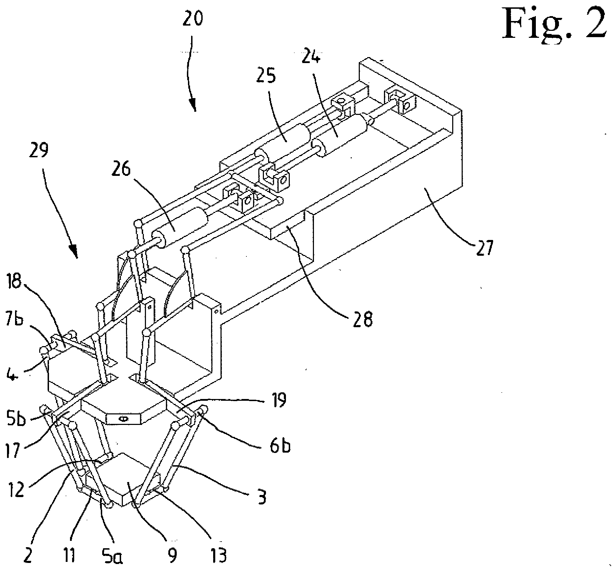

Eine Einrichtung 20 gemäss Fig. 2 unterscheidet sich von derjenigen nach Fig. 1 im Wesentlichen dadurch, dass bei ihr Linearmotoren anstelle der Rotationsantriebe 14, 15, 16 versehen sind. Die Linearmotoren 24, 25, 26 sind parallel zueinander in einem Gehäuse 27 mit einem Linearschlitten 28 angeordnet. Letzterer kann vom Linearmotor 24 hin und her bewegt werden, während die beiden anderen Linearmotoren 25, 26 auf dem Linearschlitten 28 gelagert sind und über ein zusätzliches Gelenksystem 29 die Gelenkarme 2,3,4 in Richtung der Koordinaten x, y, z bewegen können. Die Betätigungshebel 17, 18, 19 und die Aufhängungslager 11, 12, 13 der Tragplatte 9 sind für den Milchschaumspender rechtwinklig zueinander angeordnet.

Der Bewegungsablauf des Milchschaumstrahls bei der automatischen Erzeugung eines zweidimensionalen Milchschaummusters erfolgt zumindest in x- und y-Richtung an der Oberfläche des eingefüllten Getränks.

Normalerweise liegt der Kaffeetasse ein Aussendurchmesser von beispielsweise 80mm zugrunde, welcher im Vergleich zum Durchmesser der Auslassöffnung 41 beim Auslassstutzen 10 vorteilhaft mehrmals grösser ist, damit diese Motive mit der nötigen Genauigkeit produzierbar sind. Die Startposition des Milchschaumstrahls ist zum Beispiel ca. 30 mm entfernt vom Null-Punkt in der y-Achse. In der darauffolgenden Auffüllphase erfolgt dann (Mitte) eine Bewegung des Milchschaumstrahls von ca. 25 mm zurück in der y-Achse sowie seitliche Schwenkbewegungen von ca. 20 mm in der x-Achse.

Zusätzlich kann eine übergeordnete oder eine nachfolgende Bewegung in z-Richtung erfolgen, welche eine dreidimensionale Figur ermöglicht. Diese Bewegungen sind auf die gewählten Muster jeweils entsprechend vorgegeben.

Diese Einrichtungen nach der Erfindung können entweder vollumfänglich in eine Kaffeemaschine integriert werden oder als selbständiges Modul ausgebildet sein.

Die Erfindung ist mit den oben erläuterten Ausführungsbeispielen ausreichend dargetan. Sie könnte aber selbstverständlich noch durch weitere Varianten erläutert sein. So könnte zum Beispiel anstelle einer im Querschnitt annähernd runden eine längliche oder andersförmige Ausbildung der Auslassöffnung für den Milchschaum vorgesehen sein, so dass sich ebenfalls ein Muster auf der Getränkeoberfläche bilden würde.

Im Prinzip könnte das Auslassen des Milchschaums oder dergleichen durch Unterbrechen und dann einem Verschieben in zwei oder drei Koordinatenrichtungen (x, y, z) entlang der eingelassenen Getränkeoberfläche erfolgen.

## Patentansprüche

1. Verfahren zum Auslassen von Milchschaum, Flüssigkeiten oder ähnlichem aus einer Einrichtung, bei dem nach dem Einfüllen eines Getränks, vorzugsweise Kaffee, in einen Behälter eine bestimmte Menge Milchschaum oder ähnlichem durch einen Milchschaumspender (10) zugeführt wird, welche auf und/oder unterhalb der Oberfläche des eingelassenen Getränks, vorzugsweise Kaffee, verbleibt, wobei ein graphisches Muster auf der Oberfläche des in den Behälter eingelassenen Getränks automatisch mittels einer räumlichen in zwei oder drei Koordinatenrichtungen (x, y, z) gesteuerten Einrichtung (1, 20) erzeugt wird, **dadurch gekennzeichnet, dass**
der Milchschaum während dem Auslassen derart gesteuert zugeführt wird, dass durch diesen das graphische Muster auf der Oberfläche des eingelassenen Getränks mittels der gesteuerten Einrichtung (1, 20) automatisch erzeugt wird, wobei der Bewegungsablauf des Milchschaumstrahls durch den Milchschaumspender (10) der Einrichtung (1, 20) in den zwei oder drei Koordinatenrichtungen (x, y, z) erfolgt.

2. Verfahren nach Anspruch 1, **dadurch gekennzeichnet, dass**
der Milchschaum während dem Auslassen durch eine gesteuerte Zuführung in zwei oder drei Koordinatenrichtungen (x, y, z) erfolgt.

3. Verfahren nach Anspruch 2, **dadurch gekennzeichnet, dass**
die gesteuerte Zuführung des Milchschaums in x- und/oder y-Koordinatenrichtung und eine übergeordnete und/oder eine nachfolgende Bewegung in z-Richtung erfolgt, welche diese dreidimensionale Figur ermöglicht.

4. Verfahren nach einem der vorhergehenden Ansprüche 1 bis 3, **dadurch gekennzeichnet, dass**
die Steuerung der Zuführung von Milchschaum (1) oder ähnlichem programmierbar ist.

5. Verfahren nach einem der vorhergehenden Ansprüche 1 bis 4, **dadurch gekennzeichnet, dass**
als graphisches Muster die Form eines Herzes, einer Blume, einer Pflanze oder dergleichen erzeugt wird.

6. Einrichtung zum Durchführen des Verfahrens nach einem der vorhergehenden Ansprüche 1 bis 5, wobei der Milchschaum dem Kaffee automatisch durch die räumliche in zwei oder drei Koordinatenrichtungen (x, y, z) gesteuerte Einrichtung (1, 20) zuführbar ist, **dadurch gekennzeichnet, dass**
die Einrichtung (1, 20) mit individuell betätigbaren Gelenkarmen (2, 3, 4) zum Führen des Milchschaumspenders (10) versehen ist.

7. Einrichtung nach Anspruch 6, **dadurch gekennzeichnet, dass**
sie als Roboter mit individuell gesteuerten Rotationsantrieben (14, 15, 16) ausgebildet ist, die in einem gleichwinkligen Dreieck angeordnet sind und mit Betätigungshebeln (17, 18, 19) zum Betätigen der Gelenkarme (2, 3, 4) versehen sind.

8. Einrichtung nach Anspruch 6, **dadurch gekennzeichnet, dass**
sie mit parallel zueinander angeordneten Linearmotoren (24, 25, 26) ausgestattet ist, die mit einem zusätzlichen Gelenksystem (29) mit senkrecht zueinander angeordneten Betätigungshebeln (17, 18, 19) für die Gelenkarme (2, 3, 4) versehen ist.

9. Einrichtung nach einem der vorhergehenden Ansprüche 6 bis 8, **dadurch gekennzeichnet, dass**
der Kaffee und der Milchschaum in eine Kaffeetasse oder ein ähnliches Behältnis einfüllbar sind, und die Einrichtung (1, 20) mit Sensoren zur Erkennung der Tassenhöhe und Tassenposition versehen ist.

10. Einrichtung nach einem der vorhergehenden Ansprüche 6 bis 9, **dadurch gekennzeichnet, dass**
sie mit einem Sicherheitssystem zum Schutz des Benutzers versehen ist.

11. Einrichtung nach Anspruch 10, **dadurch gekennzeichnet, dass**
das Sicherheitssystem ein Lichtgitter oder einen Lichtvorhang enthält, der den Betrieb stoppt, sobald ein Fremdkörper ihn unterbricht.

12. Einrichtung nach Anspruch 10, **dadurch gekennzeichnet, dass**
das Sicherheitssystem eine Schutzhaube aufweist, durch welche die Einrichtung (1) während des Zubereitungsvorganges abgeschirmt wird.

13. Einrichtung nach einem der vorhergehenden Ansprüche 6 bis 12, **dadurch gekennzeichnet, dass**
sie in eine Kaffeemaschine vollumfänglich integrierbar ist.

14. Einrichtung nach einem der vorhergehenden Ansprüche 6 bis 12, **dadurch gekennzeichnet, dass**
sie als selbständiges Modul ausgebildet ist.

## Claims

1. Method for pouring out milk froth, liquids or the like from a device, wherein, after pouring out a drink, preferably coffee, into a container, a specific amount of milk froth or the like is supplied by a milk froth dispenser (10), which remains on and/or beneath the surface of the drink, preferably coffee, whereby a graphic pattern will be automatically produced on the surface of the poured in drink into the container by a device (1, 20) controlled spatially in two or three coordinate directions (x, y, z), **characterised in that**
while being poured out the milk froth is supplied in a controlled manner, such that with this the graphic pattern will be produced automatically on the surface of the poured in drink by the controlled device (1, 20), whereby the movement sequence of the jet of milk froth is taking place by the milk froth dispenser (10) of the device (1, 20) in the two or three coordinate directions (x, y, z).

2. Method according to Claim 1, **characterised in that**
while being poured out, the milk froth is added by being moved in a controlled manner in two or three coordinate directions (x, y, z).

3. Method according to Claim 2, **characterised in that**
this movement in this controlled manner of the milk froth can be provided in x and/or y coordinate directions and a superordinate and/or a subsequent movement in z direction, which enables this three dimensional figure respectively.

4. Method according to any of the preceding Claims 1 to 3, **characterised in that**
the control of the supply of the milk froth (1) or similar can be programmed.

5. Method according to any of the preceding Claims 1 to 4, **characterised in that**
as a graphic pattern the form of a heart, a flower, a plant or the like can be produced.

6. Device for implementing the method according of any of the preceding Claims 1 to 5, whereby the milk froth can be supplied to the coffee automatically by the device (1, 20) controlled spatially in two or three coordinate directions (x, y, z), **characterised in that**
the device (1, 20) is provided with individually operable articulated arms (2, 3, 4) for guiding the milk froth dispenser (10).

7. Device according to Claim 6, **characterised in that**
it is made in the form of a robot with individually controlled rotary drives (14, 15, 16), which are arranged in an equiangular triangle and are provided with operating levers (17, 18, 19) for operating the articulated arms (2, 3, 4).

8. Device according to Claim 6, **characterised in that**
it is equipped with linear motors (24, 25, 26) arranged parallel to one another, which are provided with an additional articulation system (29) with operating levers (17, 18, 19) arranged perpendicularly to one another for the articulated arms (2, 3, 4).

9. Device according to any of the preceding Claims 6 to 8, **characterised in that**
the coffee and the milk froth can be poured into a coffee cup or a similar container, and the device (1, 20) is provided with sensors for recognising the height of the cup and the position of the cup.

10. Device according to any of the preceding Claims 6 to 9, **characterised in that**
it is provided with a safety system for the protection of the user.

11. Device according to Claim 10, **characterised in that**
the safety system contains a light grid or a light curtain, that stops the operation as soon as a foreign body interrupts it.

12. Device according to Claim 10, **characterised in that**
the safety system has a protective hood by means of which the device (1) is shielded during the preparation process.

13. Device according to any of the preceding Claims 6 to 12, **characterised in that**
it can be fully integrated into a coffee machine.

14. Device according to any of the preceding Claims 6 to 12, **characterised in that**
it is made in the form of an independent module.

## Revendications

1. Procédé pour faire sortir de la mousse de lait, des liquides ou analogue d'un dispositif, dans lequel, après avoir versé une boisson, de préférence du café, dans un récipient, on apporte une quantité déterminée de mousse de lait ou analogue par un distributeur (10) de mousse de lait, qui reste sur/ou en dessous de la surface de la boisson, de préférence du café qui est entrée dans le récipient, dans lequel on produit un motif graphique à la surface de la boisson, qui est entrée dans le récipient, automatiquement, au moyen d'un dispositif (1, 20) commandé dans l'espace suivant deux ou trois directions (x, y, z) de coordonnées,
**caractérisé en ce que**
on apporte la mousse de lait, pendant qu'elle sort, de façon commandée de manière à produire automatiquement par celle-ci, au moyen du dispositif (1, 20) commandé, le motif graphique à la surface de la boisson, qui est entrée dans le récipient,
le déroulement du déplacement du jet de mousse de lait par le distributeur (10) de mousse de lait du dispositif (1, 20) ayant lieu dans les deux ou trois directions (x, y, z) de coordonnées.

2. Procédé suivant la revendication 1, **caractérisé en ce que** la mousse de lait est produite, pendant la sortie, par un apport commandé suivant deux ou trois directions (x, y) de coordonnées.

3. Procédé suivant la revendication 2, **caractérisé en ce que** l'apport commandé de la mousse de lait s'effectue suivant la direction de coordonnées x et/ou y et un mouvement, supérieur hiérarchiquement et/ou venant ensuite, s'effectue dans la direction z, ce qui rend possible cette figure en trois dimensions.

4. Procédé suivant l'une des revendications 1 à 3 précédentes, **caractérisé en ce que** la commande de l'apport de mousse (1) de lait et programmable.

5. Procédé suivant l'une des revendications 1 à 4 précédentes, **caractérisé en ce que** l'on produit, comme motif graphique, la forme d'un cœur, d'une fleur, d'une plante ou analogue.

6. Dispositif pour effecteur le procédé suivant l'une des revendications 1 à 5 précédentes, dans lequel la mousse de lait peut être apportée au café automatiquement par le dispositif (1, 20) commandé dans l'espace suivant deux ou trois directions (x, y, z) de coordonnées, **caractérisé en ce que** le dispositif (1, 20) est pourvu de bras (2, 3, 4) articulés pouvant être actionnés individuellement pour guider le distributeur (10) de mousse de lait.

7. Dispositif suivant la revendication 6, **caractérisé en ce qu'**il est constitué sous la forme d'un robot ayant des entraînements (14, 15, 16) en rotation commandés individuellement, qui sont disposés suivant un triangle équilatéral et sont pourvus de leviers (17, 18, 19) d'actionnement pour l'actionnement des bras (2,3,4) articulés.

8. Dispositif suivant la revendication 6, **caractérisé en ce qu'**il est équipé de moteurs (24, 25, 26) linéaires, qui sont montés parallèlement les uns aux autres et il est pourvu d'un système (29) articulé supplémentaire ayant des leviers (17,18, 19), montés perpendiculairement les uns par rapport aux autres, pour les bras (2, 3,4) articulés.

9. Dispositif suivant l'une des revendications 6 à 8 précédentes, **caractérisé en ce que** le café et la mousse de lait peuvent être versés dans une tasse à café ou dans un récipient analogue et le dispositif (1, 20) est pourvu de capteurs pour détecter la hauteur d'une tasse ou la position d'une tasse.

10. Procédé suivant l'une des revendications 6 à 9 précédentes, **caractérisé en ce qu'**il est pourvu d'un système de sécurité pour protéger l'utilisateur.

11. Procédé suivant la revendication 10, **caractérisé en ce que** le système de sécurité est une cellule photoélectrique ou un rideau lumineux, qui arrête le fonctionnement, dès qu'il est interrompu par un corps étranger.

12. Procédé suivant la revendication 10, **caractérisé en ce que** le système de sécurité a une hotte de protection, par laquelle le dispositif (1) est protégé pendant l'opération de préparation.

13. Procédé suivant l'une des revendications 6 à 12 précédentes, **caractérisé en ce qu'**il peut être intégré complètement dans une machine à café.

14. Procédé suivant l'une des revendications 6 à 12 précédentes, **caractérisé en ce qu'**il est constitué sous la forme d'un module autonome.
